(19) Europäisches Patentamt European Patent Office Office européen des brevets

(11) **EP 2 067 612 B1**

(12) **EUROPEAN PATENT SPECIFICATION**

(45) Date of publication and mention
of the grant of the patent:
**09.03.2011 Bulletin 2011/10**

(51) Int Cl.:
***B29D 11/00*** *(2006.01)*

(21) Application number: **07301632.1**

(22) Date of filing: **06.12.2007**

(54) **Method and device for manufacturing an opthalmic lens using a photoactive material**

Verfahren und Vorrichtung zur Herstellung einer ophthalmischen Linse mit fotoaktivem Material

Procédé et appareil de fabrication de lentille ophtalmique utilisant un matériau photoactif

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**10.06.2009 Bulletin 2009/24**

(73) Proprietor: **Essilor International (Compagnie Générale d'Optique) 94220 Charenton Le Pont (FR)**

(72) Inventors:
• **Rouault de Coligny, Pierre 94220 Charenton le Point (FR)**
• **Bonnin, Thierry 94220 Charenton le Pont (FR)**

(74) Representative: **Cabinet Plasseraud 52, rue de la Victoire 75440 Paris Cedex 09 (FR)**

(56) References cited:
**EP-A- 1 750 162  US-A- 3 454 686 US-A- 4 440 699**

**Description**

The present invention relates generally to an ophthalmic lens manufacturing method using photo sensitive curable material which can be selectively activated to vary its index of refraction. More specifically, the present invention pertains to patient-specific spectacle lenses manufactured with a variable index aberrator in order to more accurately correct lower order aberrations and possibly correct higher order aberrations.

Present manufacturing techniques for eyeglass lenses are capable of producing lenses that correct only the lower order (sphere and cylinder) aberrations. Customarily, lens blanks are available in discrete steps of refractive power of 0.25 diopters. In most cases, these steps may be too large to create optimum vision for a patient's eye.

As for an example, current manufacturing techniques do not effectively treat vision problems resulting from retinal dysfunction. For example, in macular degeneration, patients suffer from vision loss in selective areas of the fundus, typically close to the center of vision. Laser treatment of the affected areas further destroys retinal tissue, causing blindness at the treated areas. Clinical studies have shown that the human eye and brain are capable of switching to other areas of the retina to substitute the damaged area with an undamaged area. In other words, damaged areas in the retina are essentially bypassed by the brain. Ultimately, vision loss will occur as a portion of an image falls on the damaged retina.

Consequently, there is a need to manufacture an eyepiece such that the image may be "warped" around the dysfunctional tissue in order to allow the entire image to focus on the remaining healthy tissue.

In light of the aforementioned problems, the need for an optical element which generates a unique wavefront phase profile becomes apparent. Traditional manufacturing methods create such profiles through grinding and polishing. Such a method of manufacture is very costly due to the amount of time and expertise required.

The present invention utilizes the technology developed by the wavefront aberrator in which a layer of photoactive material, which can be selectively activated to vary its index of refraction, is exposed to an activation radiation that is modulated spatially or temporally in order to create spatially resolved variations of refractive indices. This will allow the manufacturing of a lens that is capable of introducing or compensating for low and high order aberrations.

An example of a technology developed using a wavefront aberrator has been disclosed from patent document EP 1 439 946 where a method for making a lens comprises imaging a patient's eye, selecting a first and a second lens, coating said first lens with a material having an index of refraction that can be changed by exposure to ultraviolet radiation, placing the second lens on said material, and activating, namely curing, it in accordance with the wavefront prescription determined by imaging the patient's eye.

According to this document, the epoxy aberrator is exposed to curing radiation in a pre-programmed way in order to fine-tune the refractive properties of the lens to the spherical and cylindrical prescription of the patient's eye and/or to a multi-focal or progressive addition lens prescription.

The present inventors have studied the aforementioned method and discovered that the quality of the final lens is highly dependent on the method used to control the activation radiation. Commonly used method, where the intensity of the activation radiation is locally precalculated and once locally provided to the layer of photoactive material, may lead to over-activated zones, as for example overcured zones, and to major optical defects.

Accordingly there remains a need for an improved method for manufacturing an ophthalmic lens using a photoactive material.

EP-A-1750162 discloses an apparatus and method of correcting higher-order aberrations of the human eye, according to the preambles of claims 1 and 9.US-A-4440699 discloses a method and device for moulding a transparent object where a radiation beam is passed through a mould.

Thus the goal of the present invention is to improve said method and enhance the quality of the final ophthalmic lens.

This object is obtained according to the invention by a method for manufacturing an ophthalmic lens according to claim 1.

According to the present invention and thanks to the beam splitter, it is possible to expose locally and selectively the layer of the photoactive material and to measure the resulting refractive index local value when the sample remains in a constant position. It is then possible to measure all over the activation process, for example continuously or step by step, the effectiveness of the activation radiation locally provided to the photoactive material and to control the resulting wavefront phase profile.

Maintaining the sample with the layer of a photoactive material in a constant position is advantageous because it avoids the photoactive material to flow as it could happen if the samples were displaced from a position to another position.

The present method for manufacturing an ophthalmic lens using a photoactive material may be used to manufacture all the different types of ophthalmic lenses, such as spectacle lenses, trial lenses, contact lenses and for all types of prescriptions, namely spherical and/or cylindrical aberrations corrections, higher order aberrations corrections. Resulting lenses may be single or progressive addition lenses.

Lastly, the present invention may be used to "warp" the retinal image so that damaged portions of the retina will be bypassed by the image. In order to do this, the visual field of the patient needs to be mapped with a perimeter or micro-perimeter. From this map of healthy retina, spectacle lenses could be manufactured using the present aberrator.

According to the present invention "in situ" means that the position of the sample when the measuring radiation is being provided is the same as the position of the sample when the activation radiation is provided. Thanks to the beam splitter both radiations can be provided to the sample when its position remains constant.

The wavelengths of the activation and measuring radiations are different and said wavelengths and the beam splitter are chosen so that the activation radiation is reflected on the beam splitter and the measuring radiation is transmitted through the same beam splitter.

The activation and measuring radiations can be provided simultaneously or sequentially one after the other.

The layer of a photoactive curable material may be provided on a substrate, such as a lens blank. It also may be sandwiched in between two lens blanks. The substrate may be flat or curved. The substrate may have a concave and/or a convex surface.

The substrate may be selected to improve some vision parameters of the viewer. As for an example, the substrate corrects first order vision aberrations and the cured layer corrects higher order vision aberrations.

Following another embodiment, the activated layer corrects partially or totally first order vision aberrations.

According to another embodiment there is no substrate and the activated layer of a photoactive material is the final lens.

According to the present invention a photoactive material which can be selectively and locally cured is a material which refractive index can either increase or decrease when an activation radiation is locally provided.

The refractive index variation of said material can result from chemical reactions such as thermal reactions, photochemical reactions, diffusion reactions of films or from non chemical reactions such as alignment of LCs or nanotubes, opalization reactions.

According to embodiments of the present invention, the photoactive material is chosen in the list of index decrease materials comprising Poly(phenylmethyl) Silane; Polydimethyl Silane; PolyVinyl Cinnamate (PVCm); PVCm blend comprising for example PPMS, Methyl trans-Cinnamate, trans-Cinnamate Acid; PMMA blend comprising for example Methyl trans-Cinnamate, trans-Cinnamate Acid, Nitrone; PBPMA copolymer such as P(PBPMA-co-GMA); Sol-gel hybrid films such as MPTS/PFAS.

According to other embodiments of the present invention, the photoactive material is chosen in the list of index increase materials comprising Diarylethene polymer, Penta-bromo-acrylate, Thiolene adhesives, Tribromo-acrylate, Diarylethene derivative, Acrylate adhesives, Epoxy adhesives, Azobenzenes.

According to different embodiments of the present inventions, which may be combined:

- the activation radiation is an Ultra Violet (UV) radiation ;
- the measuring radiation is a laser light, which wave length is part of the visible or infra-red (IR) range ;
- the measuring substep of step b) uses a wave front measurement method, using for example a wave front aberrometer ;

- the activation radiation is provided to the sample thanks to a light intensity modulator, such as a digital micromirror device (DMD) or a liquid crystal display (LCD), which may be coupled with a shutter;
- a feedback loop is implemented to control the local intensity of the activation radiation on the layer of the photoactive material to be activated based on the results of the measuring substep of step b).

The present invention also relates to a computer program product comprising one or more stored sequences of instruction that is accessible to a processor and which, when executed by the processor, causes the processor to carry out the steps of the preceding method for manufacturing an ophthalmic lens.

It also relates to a computer readable medium carrying one or more sequences of instructions for the here above described computer program product.

Unless specifically stated otherwise, as apparent from the following discussions, it is appreciated that throughout the specification discussions utilizing terms such as "computing", "calculating" "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

The invention is also related to an ophthalmic lens manufacturing device according to claim 9.

According to different embodiments of the present ophthalmic lens manufacturing device, which can be combined:

- the activation radiation emitter is a UV source;
- the means for measuring locally the refractive index a wave front aberrometer;
- the means for orientating and modulating the activation radiation includes a light intensity modulator, such as a digital micromirror device (DMD) or a liquid crystal display (LCD), which may be coupled with a shutter.

The novel features of this invention, as well as the invention itself, both as to its structure and its operation, will be best understood from the accompanying non limiting drawings, taken in conjunction with the accompanying description, in which like reference characters refer to similar parts, and in which:

Figures 1a to d show diagrammatic sections of ophthalmic lenses made by the method according to the present invention.

Figure 2a and b show diagrammatic views of devices according to the present invention.

Figure 3 shows a detailed diagrammatic view of part of said device.

Figure 4 shows a detailed diagrammatic view of a step of the present method for manufacturing a lens.

Figure 5 shows a diagrammatic flow chart of an embodiment of the present method for manufacturing a lens.

Figures 6 and 7a-b show diagrammatic time schedules used to implement feed back loops according to embodiments of the present invention.

Skilled artisans appreciate that elements in the figures are illustrated for simplicity and clarity and have not necessarily been drawn to scale. For example, the dimensions of some of the elements in the figure may be exaggerated relative to other elements to help improve the understanding of the embodiments of the present invention.

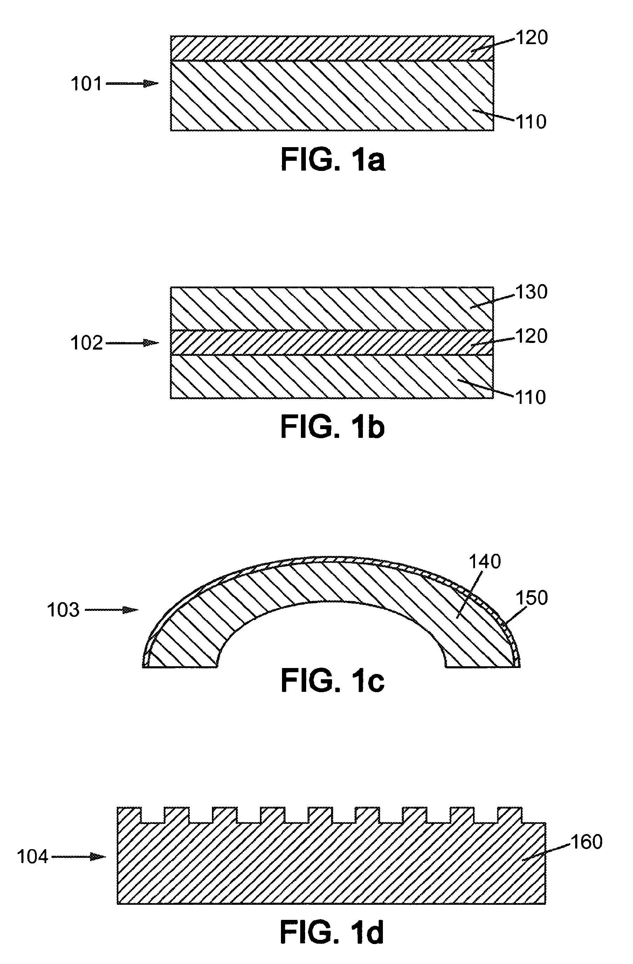

Some embodiments of lenses made by the method according to the present invention are shown on figures 1.

On figure 1a, a lens 101 made by the method according to the present invention comprises a flat substrate 110 on which a layer 120 of a photoactive material is provided.

The lens 102 of figure 1b comprises two flat substrates 110, 130 and a layer 120 of a photoactive material is provided-in between the two substrates 110, 130.

The lens 103 of figure 1c comprises a substrate 140 with a concave and a convex surface and a layer 150 of a photoactive material is provided on the convex surface of the substrate 140.

According to an embodiment, the photoactive material is a photosensitive curable material which can be selectively and locally cured thanks to curing radiation.

Example of lenses that can be manufactured according to the present method for manufacturing an ophthalmic lens using a photoactive material layer are disclosed from patent document FR 2 884 622.

As for an example, the thickness of the layer 120, 150 of a photoactive material is between 0.2 and 1mm, namely 0.5mm.

The lens 104 of figure 1d consists of a layer 160 of a photosensitive curable material where a pattern is formed on one of its surfaces. The pattern results of local activation, namely curing, of the photosensitive material to form the final relief and washing the uncured resin between said final relief.

According to an embodiment, the photosensitive material comprises an epoxy polymer.

According to an embodiment, the polymer is formed using a composition including a matrix polymer having a monomer mixture dispersed therein, the matrix polymer being selected from the group consisting of polyester, polystyrene, polyacrylate, thiol-cured epoxy polymer, thiol-cured isocyanate polymer, and mixtures thereof; the monomer mixture comprising a thiol monomer and at least one second monomer selected from the group consisting of ene monomer and yne monomer.

In one embodiment, a sheet of the photoactive material is formed. A portion of this sheet is placed on a substrate 110, 140 or between two optical elements 110, 130 to form a lens. A single large sheet can be formed in bulk with portions diced and used to form many lens blanks.

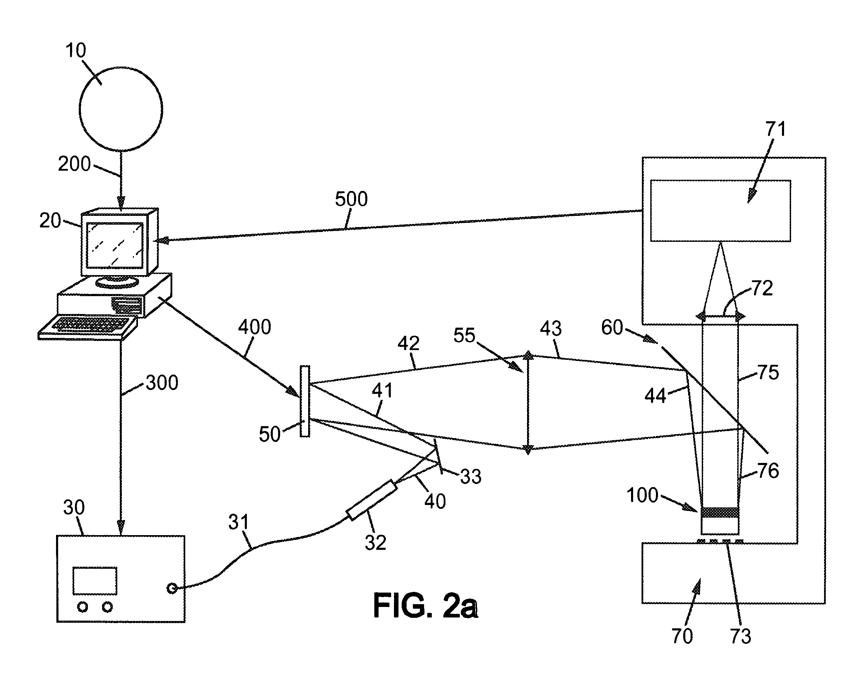

Figure 2a shows a diagrammatic view of a device according to the present invention where a sample 100 comprising a layer of a photoactive material which can be selectively and locally activated to vary its index of refraction is locally activated thanks to an activation radiation beam, such as an Ultra Violet beam 44.

Said sample 100 can for example be configured and treated to form one of the preceding lenses 101, 102, 103, 104.

The sample 100 is in situ exposed to a laser beam 76 which is used to locally measure the resulting refractive index map of the UV exposed layer of photosensitive material when or after being exposed.

A UV beam is emitted by a UV source 30 which can be finely tuned and controlled by central computer 20 through communication line 300. The UV light source can include a UV Vertical Cavity Surface Emitting Laser (VSCEL), triple YAG laser, or a UV-LED. As for an example the UV source is a LC8 UV lamp commercialized by the company Hamamatsu. The UV beam is transmitted through an optical fibre 31 to a lens system 32 to produce an enlarged UV beam 40. UV beam 40 is reflected on a mirror 33 and directed to a modulating optical system 50, such as a DLP, to obtain an UV beam 42 with a two dimensional map of intensity, which is called a two dimensional grayscale pattern.

According to an embodiment, a shutter is coupled with the UV source. The shutter may be placed between the lens system 32 and the mirror 33 or on the light path after the modulating optical system 50. It is used to suitably stop the UV beam.

According to other embodiments, the activation radiation beam is a visible light beam, emitted for example by a Mercury (Hg) lamp.

According to the present embodiment a Digital Micromirror Device (DMD) 50 is used.

As for an example, a Texas instrument DMD, known as Digital Light Projector (DLP), which operates in the UV range, such as for example at a 365 nm wavelength, can be used in the present device.

In the present embodiment the DMD 50 is controlled by the central computer 20 through communication line 400.

The two dimensional UV grayscale pattern 42 is focused by a lens or a lens group 55 to form UV beam 43 which is reflected by a beam splitter 60 and directed to sample 100 as UV beam 44. Beam 43 may be a converging beam.

The sample 100 can be in situ measured thanks to an aberrometer 70 comprising for example a wavefront sensor. The wavefront sensor can be for example a Shack-Hartmann apparatus, diffraction grating, grating, Hartmann Screen, Fizeau interferometer, ray tracing system, Tscherning aberrometer, skiascopic phase difference system, Twymann-Green interferometer, Talbot interferometer. Exemplary aberrometers are described in more detail in US Patent n°6,721,043 to Platt. B. et al. in "Light Adjustable Aberration Conjugator".

In the present embodiment a Shack-Hartmann apparatus is used. A laser source 71 emits a laser beam which is parallelized by a lens 72 to form a laser beam 75. Said laser beam 75 is transmitted through the beam splitter 60 and directed to the sample 100. The Shack-Hartmann apparatus 70 comprises a Hartmann matrix 73 which is situated under the sample 100.

The result of the Shack-Hartmann measurement is a two dimensional wavefront map of the sample 100 which can be converted in a two dimensional refractive index map of the exposed layer of the photoactive material.

Results of the aberrometer 70 are brought to the central computer 20 through connexion line 500.

The central computer 20 is used to implement metrics to control the whole manufacturing process.

Entrance data can be provided to the central computer 20 manually or through the communication line 200 which may be connected to an apparatus 10 suitable to measure the vision parameters of a viewer.

Said vision parameters are used to define the final lens characteristics which include the two dimensional variable refractive index map of the desired final layer of the photoactive material.

The lens definition can include the wave map, a pattern of refraction, a prescription in terms of sphere, cylinder, and axis, or any other relation to a pattern of refraction or correction. In addition, the lens definition may include an optical center, multiple optical centers, single correction zones, multiple correction zones, transition zone, blend zone, swim region, channel, add zones, vertex distance, segmental height, off-axis gaze zone, logos, invisible markings, etc..

In one embodiment, the two dimensional variable refractive index map is at least partially defined in terms of sphere, cylinder and axis. In such an embodiment, a further pattern of refraction for correcting high order aberrations and residual aberrations can be further calculated and incorporated into the two dimensional variable refractive index map. In other embodiments, said refractive index map can be calculated in terms of low and high order Zernike polynomials.

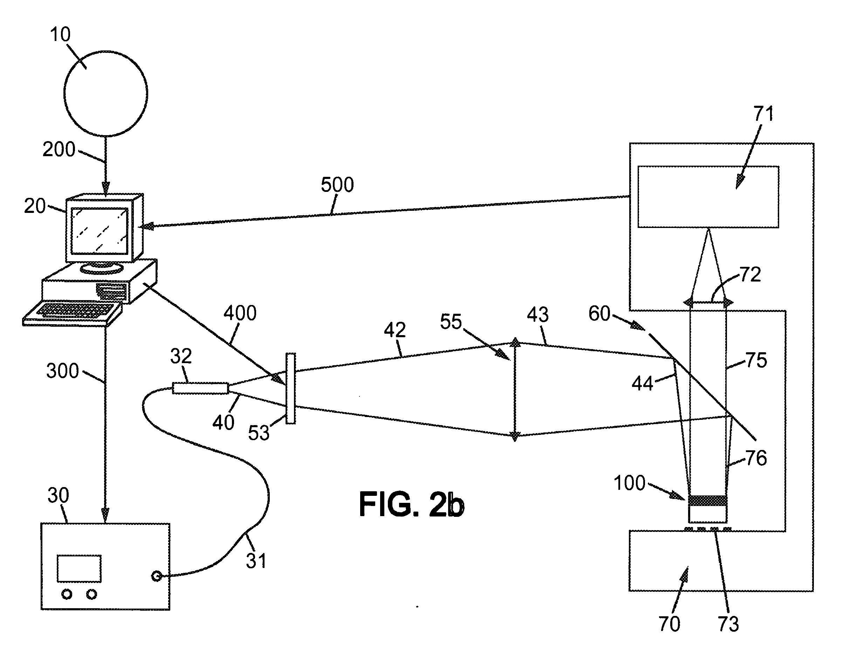

Figure 2b shows an other diagrammatic view of a device according to the present invention where the activation radiation beam is no more reflected by a DMD, but transmitted through a transmitting liquid crystal display (LCD) 53.

According to another embodiment, radiation is directed through a photomask to control the amount of radiation received at different points in the sample 100. The photomask can comprise regions that are essentially opaque to the radiation, regions that are essentially transparent to the radiation, and regions that transmit a portion of the radiation. The sample 100 is exposed to the radiation for a predetermined time to cure and partially cure the photosensitive material such that the pattern of refractive index is formed.

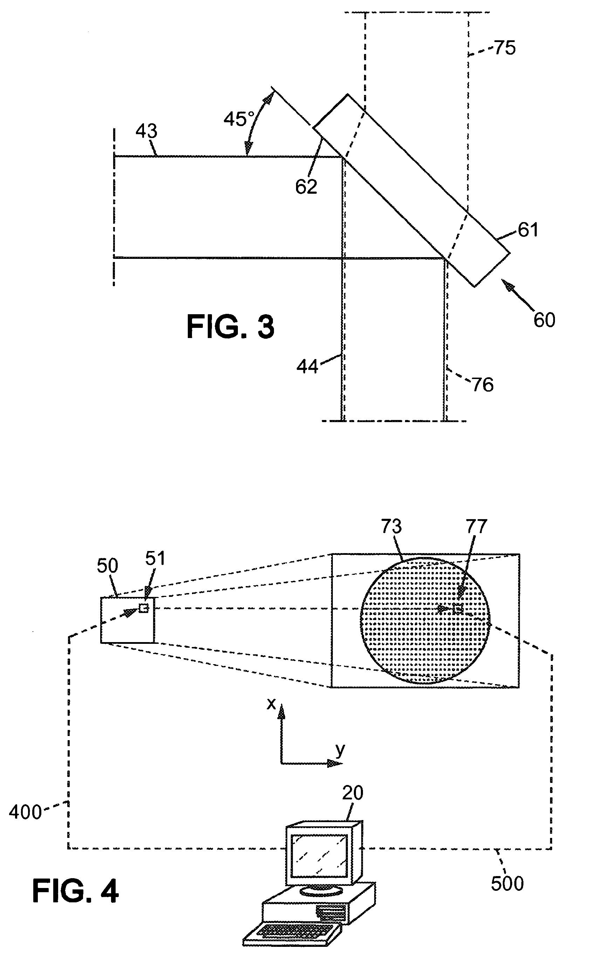

Figure 3 shows a detailed view of the beam splitter 60 when the UV activation radiation beam 43, 44 and the laser light measuring radiation beam 75, 76 are provided to the sample 100.

The axis of the beam splitter 60 is situated at a 45° angle from the UV beam 43 which is reflected on surface 62 of the beam splitter to form UV beam 44.

The laser measuring radiation beam 75 is transmitted through the beam splitter 60 to form the measuring radiation beam 76.

A beam splitter has usually two main surfaces 61 and 62, where the main surface 61 may be coated with a broadband antireflection layer and the other main surface 62 may be coated with a multilayer dielectric coating.

The coating of the main surface 61 helps to minimize ghost beams and the coating of the main surface 62 is used to selectively reflect a range of chosen wavelengths beam.

As for an example a beam splitter sold by the company Melles Griot under the commercial reference 424 DCLP may be used in the present device.

Figure 4 shows diagrammatically the correspondence between the zones of the DMD 50 and the zones of the Hartmann matrix 73.

As for an example, the DMD is a 15.3 mm x 11.5 mm device and each pixel, i.e. each mirror, is a square which side is 14 $\mu$m.

As for an example the Hartmann matrix is a 55 mm diameter device with 1 mm side square elements 77.

According to preceding embodiment, the DMD reflected UV beam is magnified 4.8 times.

According to this embodiment a set 51 of 14 pixels of the DMD 50 corresponds to a 1 mm Hartmann matrix element 77.

The matrix of the DMD can be written as M1 (i, j), where i and j are coordinates of the DMD device and the Hartmann matrix of the wavefront measurement can be written as M2 (x, y), where x and y are coordinates of the Hartmann matrix (same coordinates as the sample 100).

The results of the wavefront measurement are transmitted to the central computer 20 through line 500 and said results are treated by the computer to generate a new image matrix M1'(i, j) transmitted to the DMD through line 400. A new wavefront measurement is performed to generate a new M2' (x, y) file which is analysed and the process goes on up to a target M2$_{target}$ (x, y) file is obtained.

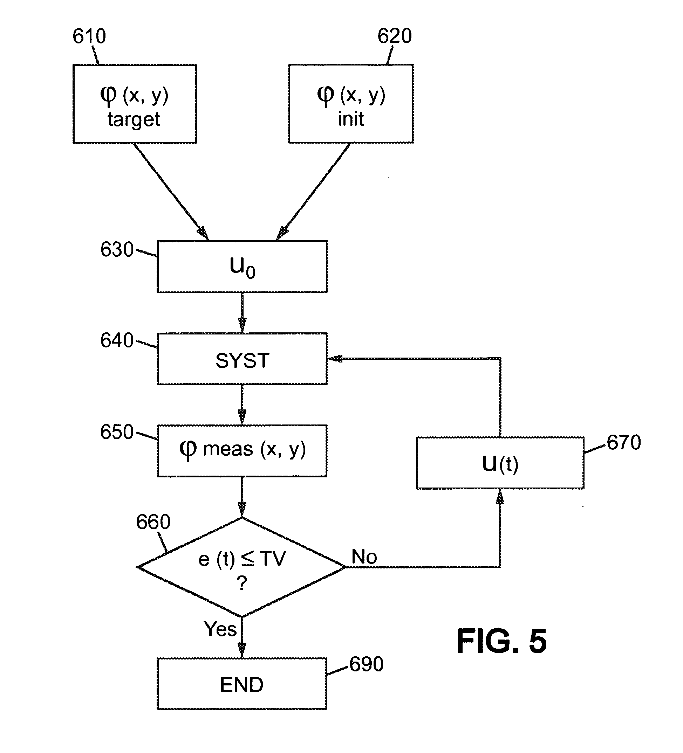

Figure 5 shows a diagrammatic flow chart of an embodiment of the present method for manufacturing a lens.

In step 610, phase parameters $\varphi_{target}$(x, y) are introduced in the computer system. $\varphi_{target}$ (x, y) is the target wavefront matrix values of the lens which is intended to be manufactured. Said step may comprise providing information from an apparatus 10 suitable to measure the vision parameters of a viewer, as shown on figure 2.

$\varphi_{init}$ (x,y) is provided to the computer system in step 620. $\varphi_{init}$ (x,y) is the initial wavefront matrix values of the sample before beginning to provide activation radiations to the photoactive material layer. Said step may comprise measuring the wavefront matrix values of the inactivated photoactive material layer of at least a substrate. It is also possible to introduce calculated values to define $\varphi_{init}$ (x,y).

The sample wavefront matrix phase values $\varphi$(x, y) are directly related to the two dimensional refractive index map of the sample according to following equation:

$$\varphi(x, y) = \left[ I(x, y) - 1 \right] * 2\pi \, e / \lambda$$

where

$\varphi(x,y)$ is the phase value,
$I(x,y)$ is the refractive index map,
e is the photoactive material layer thickness,
$\lambda$ is the measuring wave length.

It is clear from the preceding equation that either a phase values map or an index values map can be first measured to respectively determine the corresponding measured index values map or phase values map.

Both $\varphi_{target}$ (x,y) and $\varphi_{init}$(x,y) matrix values are used in step 630 to calculate an initial grayscale pattern u$_o$.

The grayscale pattern u includes the grayscale value of each point of the M1 (i,j) matrix of the DMD at a given time.

Said u function will vary over the time, t, of the manufacturing process and be then written as u (t).

The initial grayscale pattern $u_o$ is calculated so as to provide locally an activation radiation to the sample which will make the inactivated photoactive material layer partially vary in order to obtain locally an activation level lower than the final target activation level.

When the $u_o$ function is calculated, the manufacturing system, SYST, and corresponding devices are operating in step 640 and a UV light beam is provided and locally reflected by the DLP to locally modulate the activation radiation and then directed to the layer of the inactivated photoactive material of the sample to be manufactured.

Resulting wavefront matrix values are measured at the time t1 in step 650 to determine the resulting current $\varphi_{meas}$ (x,y) matrix.

A difference function, $e(t_1)$, which corresponds to the resulting values of the map of differences is calculated in step 660, where e(t) is the difference matrix between the target wavefront matrix values $\varphi_{target}$ (x,y) and the measured wavefront matrix values $\varphi_{meas(t)}$(x,y)at the time t.

As here above explained, the $e(t_1)$ values are intentionally not nil and a second grayscale pattern u $(t_1)$ (or u (t1 + ε) where ε is a short time period) is calculated in steps 670 and provided to the system and its devices in a new 640 step.

The steps 640, 650, 660, 670 correspond to a regulation loop. The process is repeated up to e(t) reach a threshold value TV. Namely when e(t) ≤ TV in every local x, y position of the activated photoactive material layer, step 690 is reached which corresponds to the end of the process.

It may happen that local $\varphi_{meas}$(x,y) values do not change anymore upon the time and it means that the local refractive index of the photoactive material layer remains significantly unchanged. The local e(t) values have then a significantly constant value and cannot reach the threshold difference value, TV. Such a situation may occur if the photoactive material is saturated, which means that the maximum activation level has been reached. If such a situation is detected, a warning signal will be emitted and the manufacturing process will be stopped.

According to an embodiment the metrics applied to e(t) to calculate u (t) is the following:

$$u(t) = u_0 + K_p \left[ e(t) + K_i \int_0^t e(t)dt + K_d \frac{de(t)}{dt} \right]$$

Where:

$K_p$ is a proportional coefficient
Ki is an integral coefficient
$K_d$ is a differential coefficient

Such an equation corresponds to a proportional - integral - differential (PID) metrics.

Parameters $K_p$, $K_d$, $K_i$ are chosen so that the e (t) value remains always positive and thus no over-activation of the photoactive material may occur.

According to an embodiment, $K_i$=$K_d$=0 and $K_p$ is chosen between 0.1 and 0.5.

According to another embodiment a predictive command can be implemented within the regulation loop.

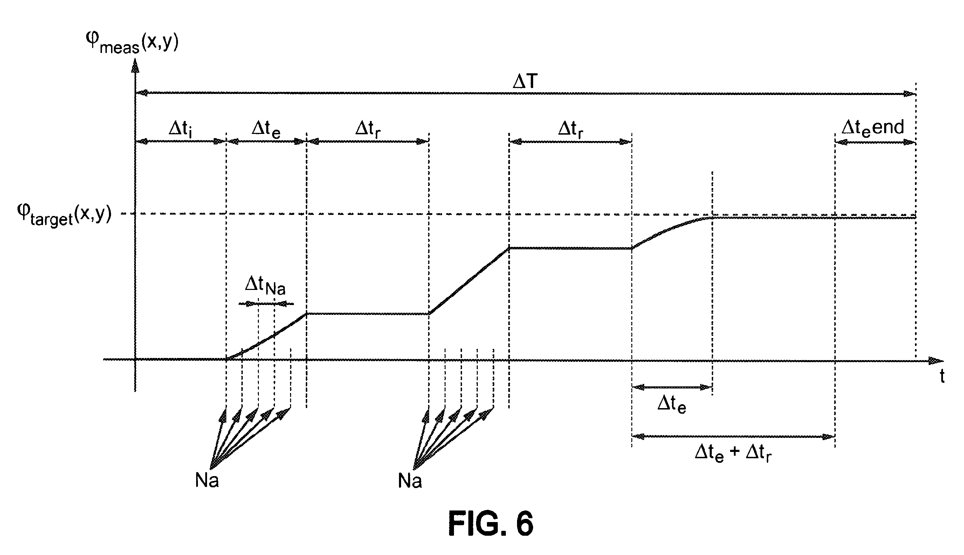

Figure 6 shows a diagrammatic time schedule of an embodiment of the manufacturing process where measured wavefront phase value $\varphi_{meas}$ (x,y) is plotted as a function of the operating time, t.

$\Delta t_i$ corresponds to the initialization period of the process where $u_o$ is measured.

$\Delta t_e$ corresponds to a time period where activation radiation, i.e. exposition time period, is provided to the sample.

$\Delta t_r$ corresponds to a relaxation time period where no activation radiation is provided to the sample, in order to take into account the time needed for the material to relax and to obtain a stable activated state.

$\Delta t_e + \Delta t_r$ is the time period corresponding to a activation cycle.

Each $\Delta t_e$ time period can be divided in a plurality of substeps where:

Na is the number of substeps
$\Delta t_{Na}$ is the time period of said substeps.

Each substep corresponds to the time used to perform a regulation loop corresponding to steps 640, 650, 660, 670 of figure 5.

The time period for manufacturing a lens corresponds to AT.

The process ends when a threshold is reached and last exposition time period is $At_e$ end.

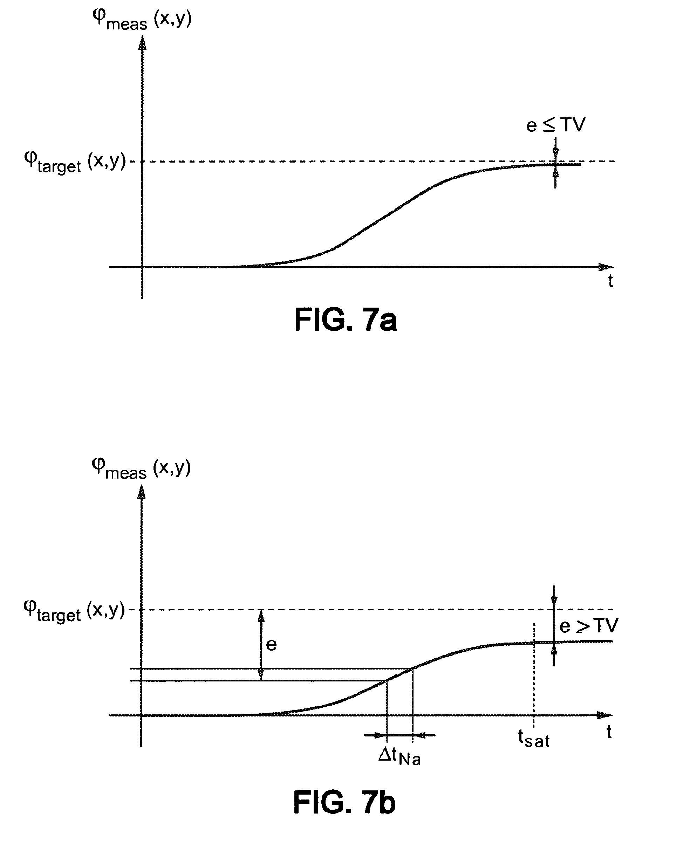

As here above explained at least two situations can lead to the end of the process which are shown on diagrammatic figures 7a and b.

According to figure 7a, the value of e (t) =$\varphi_{target}$ (x,y) -$\varphi_{meas}$ (x,y) reaches finally a low value, which is less than a given threshold, TV. The process is then stopped and the final lens corresponds to the intended target lens.

According to figure 7b, the value e(t) reaches a plateau and do not decrease anymore after the photoactive material has reached a completely activated state. The saturation of the material is reached at the saturation time, $t_{sat}$.

The value of e ($t > t_{sat}$) remains more than the value of the threshold TV. When such a situation is detected, the process is stopped and the sample is rejected.

Following data correspond to operating examples of an embodiment of the present invention:

- the target is an optical function with a maximum phase shift of 10 $\mu$m;
- the UV lamp power is about 1mW/cm$^2$;
- the regulation loop is initiated after the activation reaction has started and after measuring a 0.01 to 0.1 $\mu$m, for example a 0.05 $\mu$m, increase of $\varphi_{meas}$(x, y);
- $\Delta t_e$ is comprised between 5 to 60 seconds, as for example 15 s;
- $\Delta t_r$ is comprised between 0 to 60 seconds, as for example 5 s;
- Na is comprised between 1 to 10 as for example Na=5;
- TV is 0.05 $\mu$m.

While the different embodiments of the present invention as herein shown and disclosed in detail is fully capable of obtaining the objects and providing the advantages herein before stated, it is to be understood that it is merely illustrative of a preferred embodiment and an alternative embodiment of the invention and that no limitations are intended to the details of construction or design herein shown other than as described in the appended claims.

**Claims**

1. A method for manufacturing an ophthalmic lens (101, 102, 103, 104) comprising the steps of:

   a) providing a sample (100) with a layer (120) of a photoactive material which can be selectively and locally activated to vary its index of refraction;
   b) exposing locally and selectively the layer of the photoactive material to activation radiation (44), in situ, which means a constant position of the sample, providing the sample with a measuring radiation (76) and measuring the resulting refractive index local value of the sample, **characterized in that** the activation radiation (44) wave length differs from the measuring radiation (76) and wherein the activation radiation or the measuring radiation is reflected on the sample by a beam splitter (60) and the measuring radiation or the activation radiation respectively is transmitted through the same beam splitter (60) on the sample;
   c) step b) is repeated if necessary and up to a desired activation level.

2. The method of claim 1 wherein the activation radiation (44) is a UV radiation.

3. The method of any of the preceding claims wherein the measuring radiation (76) is a laser light, which wave length is part of the visible or infra-red range.

4. The method of any of proceeding claims wherein the measuring substep of step b) uses a wave front measurement method.

5. The method of any of the proceeding claims wherein the activation radiation is provided to the sample by a light intensity modulator.

6. The method of any of preceding claims wherein a feedback loop is implemented to control the local intensity of the activation radiation on the layer of the photoactive material to be activated based on the results of the measuring substep of step b).

7. A computer program product comprising one or more stored sequence of instruction that is accessible to a processor and which, when executed by the processor, causes the processor to carry out the steps of any of claims 1 to 6.

8. A computer readable medium carrying one or more sequences of instructions of the computer program product of claim 7.

9. An ophthalmic lens manufacturing device comprising:

- a activation radiation emitter (30);
- means for orientating (33, 55, 60) and modulating (50) the activation radiation (40, 41, 42, 43, 44) on a sample (100);
- means (70) for measuring locally the refractive index of the sample, where said means uses a measuring radiation (76) **characterized in that** its wave length differs from the wave length of the activation radiation; and that

it also comprises:

- a beam splitter (60) suitable to transmit the measuring radiation or the activation radiation and to reflect respectively the activation radiation or the measuring radiation, said beam splitter (60) being part of the means for orientating the activation radiation on the sample.

10. The device of claim 9 wherein the activation radiation emitter (30) is a UV source.

11. The device of claim 9 or claim 10 wherein the means for measuring locally the refractive index is a wave front aberrometer (70).

12. The device of any of claims 9 to 11 wherein the means for orientating and modulating the activation radiation includes a light intensity modulator.


**Patentansprüche**

1. Verfahren zur Herstellung einer ophthalmischen Linse (101, 102, 103, 104), umfassend die Schritte:

a) eine Probe (100) mit einer Schicht (120) eines photoaktiven Materials zu versehen, das selektiv und lokal aktiviert werden kann, um seinen Brechungsindex zu variierten;
b) die Schicht des photoaktiven Materials lokal und selektiv einer Aktivierungsstrahlung (44) auszusetzen, die Probe in situ, das heisst an einer gleich bleibenden Position der Probe, mit einer Messstrahlung (76) zu versehen und den resultierenden lokalen Brechungsindex-Wert der Probe zu messen, **dadurch gekennzeichnet, dass** die Wellenlänge der Aktivierungsstrahlung (44) sich von der Messstrahlung (76) unterscheidet, und wobei die Aktivierungsstrahlung oder die Messstrahlung durch einen Strahlteiler (60) auf die Probe reflektiert wird, und die Messstrahlung beziehungsweise die Aktivierungsstrahlung durch den gleichen Strahlteiler (60) auf die Probe transmittiert wird;
c) wobei Schritt b), falls notwendig, bis zu einem gewünschten Aktivierungsniveau wiederholt wird.

2. Verfahren nach Anspruch 1, wobei die Aktivierungsstrahlung (44) eine UV-Strahlung ist.

3. Verfahren nach einem der vorhergehenden Ansprüche, wobei die Messstrahlung (76) ein Laser-Licht ist, dessen Wellenlänge Teil des sichtbaren oder infraroten Bereichs ist.

4. Verfahren nach einem der vorhergehenden Ansprüche, wobei der Mess-Teilschritt von Schritt b) ein Wellenfront-Messverfahren verwendet.

5. Verfahren nach einem der vorhergehenden Ansprüche, wobei die Aktivierungsstrahlung der Probe durch einen Lichtintensität-Modulator zugeführt wird.

6. Verfahren nach einem der vorhergehenden Ansprüche, wobei eine Feedback-Schleife implementiert ist, um die lokale Intensität der Aktivierungsstrahlung auf der Schicht des photoaktiven Materials zu steuern/regeln, das auf Basis der Ergebnisse des Mess-Teilschritts von Schritt b) aktiviert werden soll.

7. Computerprogrammprodukt, umfassend eine gespeicherte Anweisungssequenz oder mehrere gespeicherte Anweisungssequenzen, die einem Prozessor zugänglich ist/sind, und die bei Ausführung durch den Prozessor bewirkt/bewirken, dass der Prozessor die Schritte von einem der Ansprüche 1 bis 6 ausführt.

8. Computerlesbares Medium, das eine oder mehrere Anweisungssequenzen des Computerprogrammprodukts nach Anspruch 7 trägt.

9. Einrichtung zur Herstellung ophthalmischer Linsen, umfassend:

    - einen Aktivierungsstrahlung-Emitter (30)
    - ein Mittel zum Orientieren (33, 55, 60) und Modulieren (50) der Aktivierungsstrahlung (40, 41, 42, 43, 44) auf einer Probe (100);
    - ein Mittel (70) zum lokalen Messen des Brechungsindex der Probe, wobei dieses Mittel eine Messstrahlung (76) verwendet,

    **dadurch gekennzeichnet, dass** sich deren Wellenlänge von der Wellenlänge der Aktivierungsstrahlung unterscheidet, und dass die Einrichtung weiter umfasst:

    - einen Strahlteiler (60), der dazu geeignet ist, die Messstrahlung oder die Aktivierungsstrahlung zu transmittieren und die Aktivierungsstrahlung beziehungsweise die Messstrahlung zu reflektieren, wobei der Strahlteiler (60) Teil des Mittels zum Orientieren der Aktivierungsstrahlung auf der Probe ist.

10. Einrichtung nach Anspruch 9, wobei der Aktivierungsstrahlung-Emitter (30) eine UV-Quelle ist.

11. Einrichtung nach Anspruch 9 oder Anspruch 10, wobei das Mittel zum lokalen Messen des Brechungsindex ein Wellenfront-Aberrometer (70) ist.

12. Einrichtung nach einem der Ansprüche 9 bis 11, wobei das Mittel zum Orientieren und Modulieren derAktivierungsstrahlung einen Lichtintensität-Modulator umfasst.

## Revendications

1. Procédé de fabrication d'une lentille ophtalmique (101, 102, 103, 104) comprenant les étapes consistant à :

    a) munir un échantillon (100) d'une couche (120) d'un matériau photoactif qui peut être activé sélectivement et localement pour modifier son indice de réfraction ;
    b) exposer localement et sélectivement la couche du matériau photoactif à un rayonnement d'activation (44), in situ, ce qui signifie une position constante de l'échantillon, transmettre à l'échantillon un rayonnement de mesure (76) et mesurer la valeur locale d'indice de réfraction de l'échantillon obtenue, **caractérisé en ce que** la longueur d'onde du rayonnement d'activation (44) diffère du rayonnement de mesure (76) et dans lequel le rayonnement d'activation ou le rayonnement de mesure est réfléchi sur l'échantillon par un diviseur de faisceau (60) et le rayonnement de mesure ou le rayonnement d'activation est respectivement transmis à travers le même diviseur de faisceau (60) à l'échantillon ;
    c) l'étape b) étant répétée si nécessaire et jusqu'à un niveau d'activation souhaité.

2. Procédé selon la revendication 1 dans lequel le rayonnement d'activation (44) est un rayonnement UV.

3. Procédé selon l'une quelconque des revendications précédentes dans lequel le rayonnement de mesure (76) est une lumière laser, dont la longueur d'onde fait partie de la plage visible ou infrarouge.

4. Procédé selon l'une quelconque des revendications précédentes dans lequel la sous-étape de mesure de l'étape b) utilise un procédé de mesure de front d'onde.

5. Procédé selon l'une quelconque des revendications précédentes dans lequel le rayonnement d'activation est transmis à l'échantillon par un modulateur d'intensité de lumière.

6. Procédé selon l'une quelconque des revendications précédentes dans lequel une boucle de rétroaction est mise en oeuvre pour contrôler l'intensité locale du rayonnement d'activation sur la couche du matériau photoactif à activer sur la base des résultats de la sous-étape de mesure de l'étape b).

7. Produit de programme informatique comprenant une ou plusieurs séquence(s) en mémoire d'instructions qui est (sont) accessible(s) à un processeur et qui, lorsqu'exécutée(s) par le processeur, condui(sen)t le processeur à réaliser les étapes selon l'une quelconque des revendications 1 à 6.

8. Support lisible sur ordinateur réalisant une ou plusieurs séquence(s) d'instructions du produit de programme informatique selon la revendication 7.

9. Dispositif de fabrication de lentille ophtalmique comprenant :

- un émetteur de rayonnement d'activation (30) ;
- des moyens d'orientation (33, 55, 60) et de modulation (50) du rayonnement d'activation (40, 41, 42, 43, 44) sur un échantillon (100) ;
- un moyen (70) de mesure locale de l'indice de réfraction de l'échantillon, ledit moyen utilisant un rayonnement de mesure (76) **caractérisé en ce que** sa longueur d'onde diffère de la longueur d'onde du rayonnement d'activation ; et

**en ce qu'**il comprend également :

- un diviseur de faisceau (60) permettant de transmettre le rayonnement de mesure ou le rayonnement d'activation et de réfléchir respectivement le rayonnement d'activation ou le rayonnement de mesure, ledit diviseur de faisceau (60) faisant partie des moyens d'orientation du rayonnement d'activation sur l'échantillon.

10. Dispositif selon la revendication 9, dans lequel l'émetteur de rayonnement d'activation (30) est une source d'UV.

11. Dispositif selon la revendication 9 ou la revendication 10 dans lequel le moyen de mesure locale de l'indice de réfraction est un aberromètre de front d'onde (70).

12. Dispositif selon l'une quelconque des revendications 9 à 11 dans lequel les moyens d'orientation et de modulation du rayonnement d'activation comprennent un modulateur d'intensité de lumière.

101 →

120

110

**FIG. 1a**

102 →

130

120

110

**FIG. 1b**

103 →

140

150

**FIG. 1c**

104 →

160

**FIG. 1d**

**FIG. 2a**

EP 2 067 612 B1

**FIG. 2b**

EP 2 067 612 B1

**FIG. 3**

**FIG. 4**

FIG. 5

FIG. 6

$\varphi_{meas}(x,y)$

$\varphi_{target}(x,y)$

$e \leq TV$

t

**FIG. 7a**

$\varphi_{meas}(x,y)$

$\varphi_{target}(x,y)$

e

$e > TV$

$\Delta t_{Na}$

$t_{sat}$

t

**FIG. 7b**

**EP 2 067 612 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1439946 A
- EP 1750162 A
- US 4440699 A
- FR 2884622
- US 6721043 B, Platt. B.